# EUROPÄISCHE PATENTSCHRIFT

(11) **EP 1 706 986 B1**
(45) Veröffentlichungstag und Bekanntmachung des Hinweises auf die Patenterteilung: **10.10.2018**
(21) Anmeldenummer: 04766626.8
(22) Anmeldetag: 27.08.2004
(51) Int. Cl.: H04L 29/06, H04M 3/53, H04M 3/42

(54) **VERFAHREN ZUM STEUERN VON DATENVERBINDUNGEN**
METHOD FOR CONTROLLING DATA LINKS
PROCÉDÉ DE COMMANDE DE LIAISONS DE DONNÉES

(30) Priorität: 20.01.2004 DE 102004002915
(43) Veröffentlichungstag der Anmeldung: 04.10.2006
(73) Patentinhaber: Nokia Solutions and Networks GmbH & Co. KG, 81541 Munich (DE)
(72) Erfinder: GRANZER, Hermann, 82343 Pöcking (DE); SCHEUER, Axel, 80804 München (DE)
(74) Vertreter: Weidel, Gottfried
(86) Internationale Anmeldenummer: PCT/EP2004/051942
(87) Internationale Veröffentlichungsnummer: WO 2005/069596

(56) Entgegenhaltungen:
- EP-A- 0 952 723
- EP-A- 1 292 091
- WO-A-00/41416
- WO-A-02/05533
- DE-C- 19 523 980
- GB-A- 2 386 290
- US-A- 5 454 024
- US-B1- 6 243 754

## Beschreibung

Die zunehmende Verbreitung von Diensten (Videotelefonie, Video-on-Demand, Online gaming, Messaging etc.) muss durch das Bereitstellen insbesondere breitbandiger Datenverbindungen unterstützt werden. Dadurch ergeben sich weitere Möglichkeiten der Nutzung neuer Dienste (Services) und Leistungsmerkmale. Für den Nutzer hat dies den Vorteil, über immer neue und komfortablere Kommunikationsdienste verfügen zu können. Für den Anbieter dieser Dienste ergeben sich neue, bis dahin ungenutzte Wertschöpfungen. Die Nutzung dieser Dienste setzt aber eine Datenverbindung voraus, die zum einen über eine hohe Bandbreite (d.h. ein hohes Datentransportvolumen) verfügt, und zum anderen über eine längere Zeitspanne hinweg belegt werden kann.

Dies bedeutet jedoch in der Praxis einen erheblichen Kostenaufwand für den Nutzer, da der Anbieter des Dienstes (bzw. der Datenverbindung) die nötigen Ressourcen dauerhaft zur Verfügung stellen muss. Die hierzu erforderlichen Zugangseinheiten bzw. die dort benutzten physikalischen Anschlüsse (sog. "ports") sind jedoch teuer.

Beim Stand der Technik existiert lediglich die Möglichkeit, die Datenverbindung ständig aufrecht zu erhalten. So ist z.B. die Herstellung einer IP-basierten Videoverbindung nur möglich, wenn beide teilnehmenden Endgeräte bei den Teilnehmern mit dem Datennetz verbunden sind. Es müssen somit beispielsweise beide PCs (Personal Computer) eingeschaltet sein, beide Video-Settop-Boxen eine ständige Datenverbindung aufrechterhalten etc. Da dies normalerweise nicht der Fall ist, ist eine vorherige Abstimmung der beiden Teilnehmer erforderlich. Beide müssen daher, typischerweise per Telefon, Kontakt aufnehmen und sich abstimmen, ihre jeweiligen Endgeräte zu aktivieren und mit dem Datennetz zu verbinden.

Weiterhin verhindert die dauerhafte Aufrechterhaltung einer Datenverbindung z.B. Stromsparmodi in den beteiligten Zugangseinheiten (z.B. Power-down Modus bei DSLAM Einheiten im Falle eines DSL Zugangs). Der Nutzer hat deshalb schon aus Gründen der Energieeinsparung ein großes Interesse an der Vermeidung unnötiger Online-Zeiten. Nicht zuletzt diese Effekte trugen zum raschen Aussterben der ISDN Flatrates für Internetzugänge bei. Mit der zunehmenden Verbreitung der neuen Mehrwertdienste ist jedoch eine "Erreichbarkeit on-demand" des jeweiligen Endgerätes erforderlich.

Aus der Druckschrift WO-A-0041416 ist ein Verfahren zur Steuerung einer Datenverbindung in einem drahtlosen Kommunikationsnetz bekannt, wobei zur Verringerung eines SMS- oder USSD-Verkehrsaufkommens derartige Dienste über eine Sprachverbindung bereitgestellt werden.

Aus der Druckschrift EP-A-1292091 ist ein Verfahren zum Übertragen von Kurznachrichten unter Verwendung von IP-Telefonen bekannt, wobei das H.323 Protokol und ein zugehöriger Gatekeeper Vorraussetzung sind. Eine SMS-Kurznachricht wird hierbei zur IP-Adressierung eines anzurufenden Teilnehmers verwendet.

Aus der Druckschrift US-B-6243754 ist ein Verfahren zur dynamischen Auswahl von Netzwerkdienstanbietern bekannt, wobei auf der Grundlage von jeweiligen Anwendungsanforderungen aus einer Vielzahl von Netzwerkdienstanbietern ein einziger Anbieter dynamisch ausgewählt werden kann.

Die weiterhin genannte Druckschrift US-A-5454024 offenbart ein Verfahren zum Überwachen von Teilnehmerendgeräten, wobei die teilnehmerseitig erfassten Ereignisse paketweise an eine Überwachungsstation übertragen werden.

Die Druckschrift GB-A-2386290 offenbart ein Verfahren zum Aufbau einer Datenverbindung zwischen einem anfordernden Endgerät und einer Vermittlungsstelle, wobei z.B. in einer SMS-Kurznachricht eine Zieladresse für einen gewünschten Kontakt ausgewertet und entsprechend eine Datenverbindung aufgebaut wird.

Auch die Druckschrift WO-A-0205533 offenbart lediglich ein Verfahren zum Aufbau einer Sprachverbindung zwischen einem mobilen Teilnehmer und einem weiteren Teilnehmer, wobei eine Kurznachricht als Adressierungsanforderung des mobilen Teilnehmers ausgewertet wird, der die gewünschte Rufnummer des anderen Teilnehmers nicht kennt oder vergessen hat

In ähnlicher Weise bezieht sich die Druckschrift EP-A2-0952723 lediglich auf eine Adressierungsproblematik eines Verbindungsaufbaus, wobei auf der Grundlage einer Such-Anforderung die Adressen von zwei Teilnehmern ermittelt und zwischen ihnen eine Sprachverbindung aufgebaut wird.

Die Druckschrift WO 03/094453 A1 beschreibt ein System für das Durchschalten multimedialer Datenkommunikationen, insbesondere VoIP Telefonie, Kabelfernsehen, digitale Audio- und Videodaten.

Die Druckschrift US 4962497 (A) beschreibt ein modulares Vermittlungssystem, welches unter verteilter Steuerung arbeitet und integrierten leitungsvermittelten und paketvermittelten Verkehr mit für die Art von Verkehr geeigneten Datenraten unterstützt.

Die Druckschrift EP 1148688 A1 bezieht sich auf eine Proxyvorrichtung und ein Verfahren, die einen transparenten Kommunikationssitzungsaufbau gemäß unterschiedlicher Kommunikationsfähigkeiten erlauben.

Der Erfindung liegt die Aufgabe zugrunde, einen Weg aufzuzeigen, wie die Nutzung von Diensten effizient und kostengünstig unterstützt werden kann.

Erfindungsgemäß wird diese Aufgabe durch die Merkmale des Patentanspruchs 1 gelöst.

Ein wesentlicher Vorteil der Erfindung ist darin zu sehen, dass die eigentliche Datenverbindung nur bei Bedarf initiiert wird ("on demand"). Damit ist eine bedarfsgesteuerte Erreichbarkeit sichergestellt. Teure Netzressourcen werden somit nur dann belegt, wenn Sie wirklich benötigt werden, womit keine Einschränkung in der Nutzung komfortabler Mehrwertdienste verbunden ist. Damit ist eine Möglichkeit aufgezeigt, wie Dienste genutzt werden können, die das Merkmal "always online" bedingen.

Dies erfolgt, indem die bestehende TDM Technik quasi als Trigger für die Initiierung einer Datenverbindung genutzt wird. Die TDM Verbindung ist ohnehin ständig vorhanden, die entsprechenden Anschlüsse (ports) sind grundsätzlich ständig beschaltet, wodurch weder zusätzliche Ressourcen noch Energie verbraucht wird. Über diese bestehende TDM Verbindung kann daher dem empfangenden Endgerät eine Signalisierung übermittelt werden, die geeigneten Endgeräten ein Trigger zum Aufbau einer Datenverbindung übergibt. Dies entspricht einem "online on demand", wie es für die oben beschriebenen Szenarien erforderlich ist. Dabei ist sowohl eine endgerätebasierte als auch eine netzbasierte Triggerung möglich.

Mit einer derartigen Lösung ergibt sich eine optimale Ausnutzung der Ressourcen bzw. Einsparung zusätzlicher Ressourcen (Ressourcen werden sehr effektiv nur bei Bedarf belegt und benutzt). Der Trigger für diese Datenverbindungen kann über bestehende Festnetzstrukturen z.B. als Festnetz SMS übertragen werden. Eine Erweiterung bzw. eine andersartige Signalisierung mit weitergehenden Inhalten und Möglichkeiten sind aber ebenso denkbar (z.B. mit Hilfe des ISDN D-Kanals, der DTMF Signalisierung oder über Steuerspannungssignale).

Vorteilhafte Weiterbildungen der Erfindung sind in den abhängigen Ansprüchen angegeben.

Die Erfindung wird im Folgenden anhand einer Figur näher erläutert. Demgemäß ist vorgesehen, dass ein Teilnehmer einem weiteren Teilnehmer eine Multimedia Nachricht (z.B. ein Lied, ein Bild, ein kurzes Video als Grußbotschaft) übermitteln will (Multimedia Messaging). Da sein Empfangsgerät nicht mit dem Datennetz verbunden ("offline") ist, würde dieses Vorhaben nicht gelingen, es kommt keine Kontaktaufnahme zustande. Dem Dienstbetreiber sowie dem Betreiber des Kommunikationsnetzes entgeht damit ein möglicher Umsatz bzw. Gewinn.

Erfindungsgemäß wird vorgeschlagen, der eigentlichen Datenübertragung einen TDM-basierten Trigger voranzustellen. Das empfangende Teilnehmerendgerät nimmt diesen Trigger entgegen (bevor z.B. das (normale) Telefon diesen entgegennimmt, wie im Falle einer SMS), baut eine Datenverbindung auf, signalisiert die Empfangsbereitschaft und kann dann die entsprechende Nachricht empfangen. Nach Abschluss dieser automatisch ablaufenden Kommunikation kann die Datenverbindung, eventuell nach einer gewissen Zeitverzögerung oder auf erneuten Trigger, wieder abgebaut werden. Der Begriff IP-basierter Datenverbindung ist hierbei sehr breit zu definieren. So sind unter Datenverbindung auch Sprachverbindungen zu sehen. Ebenso sind hierunter Verbindungen zu verstehen, die für die zu übertragenden Daten einen ISDN D-Kanal, eine DTMF-Signalisierung oder Steuerspannungssignale bereitstellen.

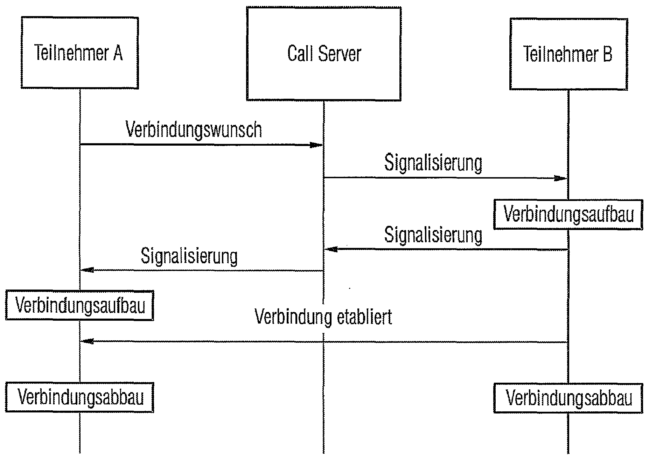

In einer ersten Ausgestaltung der Erfindung ist vorgesehen, den Trigger als netzbasierten Trigger auszubilden. Dies bedeutet, dass eine zentrale Einrichtung im Netz diese Vorgänge steuert. Die entsprechenden Verhältnisse sind in der Figur aufgezeigt. Falls somit Teilnehmer A einen Verbindungswunsch an Teilnehmer B sendet, erkennt eine zentrale Netzeinrichtung die entsprechende Signalisierungsinformation, interpretiert und wertet sie aus. In der zentralen Einrichtung ist der Zustand der Endgeräte A, B abgespeichert. Falls nun das Endgerät des Teilnehmers B diese Verbindung nicht akzeptieren kann, da das Endgerät inaktiv ist, initiiert das Netz bzw. entsprechende Netzentitäten (z.B. Call Server) die Triggersignalisierung an Teilnehmer B. Dies kann auch ohne Kenntnis des Zustandes von B erfolgen, quasi "vorsichtshalber", um die Speicherung des B-Zustandes zu vermeiden und damit Fehler zu verhindern. Dessen Endgerät baut daraufhin die IP-basierte Datenverbindung auf und signalisiert die Empfangsbereitschaft an das Netz bzw. die entsprechende Netzentität. Diese kann nun die Kommunikation zwischen A und B komplett vermitteln. Der Vorteil dieser Lösung liegt in der zentralen Logik, die Steuerung und Vergebührungsmöglichkeit für solche Dienste vornimmt.

In einer weiteren Ausgestaltung der Erfindung ist vorgesehen, den Trigger als endteilnehmerbasierten Trigger auszubilden. Falls somit Teilnehmer A mit Teilnehmer B über eine Datenverbindung kommunizieren möchte (z.B. einen Videoanruf) übermittelt das dem Teilnehmer A zugeordnete Endgerät eine Signalisierung zum Endgerät von Teilnehmer B. Dieses Endgerät empfängt die Signalisierung und baut die Datenverbindung auf. Teilnehmerendgerät B informiert Teilnehmerendgerät A (gegebenenfalls über die nun erstellte IP-basierte Datenverbindung), dass die Verbindung besteht, A kann die Verbindung nun wie gewünscht aufbauen. Alternativ kann das Endgerät von Teilnehmer A auch einfach einige Male "testen", ob die Nachricht nun zugestellt werden kann. Eine erstmalige Signalisierung der Empfangsbereitschaft von B ist damit nicht zwingend erforderlich.

In einer speziellen Lösung dieses endteilnehmerbasierten Triggers ist als Trigger eine Festnetz-SMS vorgesehen. Dies bedeutet, dass der Trigger von A nach B per SMS im Festnetz übertragen wird. Teilnehmer A will z.B. eine Multimedianachricht an Teilnehmer B senden. Er benutzt sein Endgerät, stellt die Nachricht zusammen und initiiert das Absenden. Für ihn völlig transparent setzt sein Endgerät erst eine SMS-Nachricht an Teilnehmer B ab, die einen bestimmten Triggerinhalt enthält (z.B. "Action = get_ready_for_reception; Code = MultiMediaMesage; Sender = A"). Das Endgerät von Teilnehmer B kann diese SMS empfangen und interpretiert den Inhalt. Wird er verstanden und akzeptiert, so stellt das B seitige Endgerät eine Datenverbindung her und signalisiert optional an das Endgerät von Teilnehmer A seine Empfangsbereitschaft über eine weitere SMS (Action = send_now; Code = MultiMediaMessage; Receiver = B). Das Endgerät des Teilnehmers A kann nun ebenfalls die Datenverbindung herstellen und die eigentliche Nachricht absenden. Nach Abschluss des Transfers trennen beide Endgeräte die Datenverbindung wieder. Genauso kann eine Videoverbindung auf diese Weise aufgebaut werden. Gerade MMS im Festnetz ist durchaus selbstständig denkbar.

Mit dieser Vorgehensweise wird sichergestellt, dass teuere Datenverbindungen sowohl A als auch B seitig nur aufgebaut werden, wenn beide Seiten bereit sind, die Nachrichten auszutauschen. Dasselbe Verfahren kann natürlich analog auch zum Aufbau von Sprach- oder Videoverbindungen benutzt werden. Grundsätzlich kann diese Vorgehensweise auf das gesamte Netz ausgedehnt werden. So kann Teilnehmer A Teilnehmer B triggern, welcher daraufhin eine Nachricht an Teilnehmer C übergibt.

Der besondere Vorteil der Erfindung ist darin zu sehen, dass die Datenverbindung nicht notwendigerweise breitbandig sein muss. Auch schmalbandige Datenverbindungen können mit der Erfindung behandelt werden. Kommerzielle Einsatzmöglichkeiten für die Trigger können z.B. das Streamen von TV Inhalten auf Endkunden Geräte wie Fernseher, Videorecorder, Set-Top-Boxen sein. Ferner ist auch das netzinterne Streaming auf Verteilerstationen (Multicast points) ebenso denkbar, wie die direkte Zustellung von E-mails, ohne dass eine Aktion des PCs bzw. dessen E-mail Software erforderlich ist. Letztlich kann die Erfindung auch im Heimnetzwerk eingesetzt werden. (Senden von Alarminformationen, Überwachungsinformationen ("Einbruch", "Wasserschaden", "Heizung ausgefallen") an Servicebetriebe oder entsprechende Kundenterminals (Handy)).

## Patentansprüche

1. Verfahren zum Steuern einer IP-basierten Datenverbindung, die zwischen wenigstens zwei Teilnehmern (A, B) aufgebaut werden kann, **dadurch gekennzeichnet,**
**dass** im Bedarfsfall von einem (A) der wenigstens zwei Teilnehmer (A, B) ein TDM-basierter Trigger gesendet wird, wodurch die IP-basierte Datenverbindung automatisch aufgebaut wird, wobei ein den TDM-basierten Trigger empfangendes Teilnehmerendgerät eines anderen (B) der wenigstens zwei Teilnehmer (A, B) den TDM-basierten Trigger entgegennimmt, einen Datenverbindungsaufbau vornimmt, eine Empfangsbereitschaft signalisiert und dann eine entsprechende Nachricht über die IP-basierte Datenverbindung empfangen kann.

2. Verfahren nach Anspruch 1,
**dadurch gekennzeichnet,**
**dass** der Trigger endteilnehmerbasiert ausgebildet ist.

3. Verfahren nach Anspruch 1, 2,
**dadurch gekennzeichnet,**
**dass** der Trigger als SMS Festnetz-Nachricht ausgebildet ist.

4. Verfahren nach Anspruch 1,
**dadurch gekennzeichnet,**
**dass** der Trigger netzbasiert ausgebildet ist.

5. Verfahren nach Anspruch 4,
**dadurch gekennzeichnet,**
**dass** eine Signalisierung des TDM-basierten Triggers an das Teilnehmerendgerät des anderen (B) der wenigstens zwei Teilnehmer (A, B) durch ein einen Call Server initiiert wird.

6. Verfahren nach einem der vorstehenden Ansprüche,
**dadurch gekennzeichnet,**
**dass** die IP-basierte Datenverbindung breitbandig ist.

7. Verfahren nach einem der vorstehenden Ansprüche 1 bis 5, **dadurch gekennzeichnet,**
**dass** die IP-basierte Datenverbindung schmalbandig ist.

8. Verfahren nach einem der vorstehenden Ansprüche, **dadurch gekennzeichnet,**
**dass** die Nachricht eine Multimedia Nachricht ist.

## Claims

1. Method for controlling an IP-based data connection that can be set up between at least two subscribers (A, B), **characterized**
**in that** one (A) of the at least two subscribers (A, B) sends a TDM-based trigger when needed, as a result of which the IP-based data connection is set up automatically,
wherein a subscriber terminal, receiving the TDM-based trigger, of another (B) of the at least two subscribers (A, B) accepts the TDM-based trigger, performs setup of a data connection, signals readiness to receive and can then receive an applicable message via the IP-based data connection.

2. Method according to Claim 1,
**characterized**
**in that** the trigger is configured on an end subscriber basis.

3. Method according to Claim 1 or 2,
**characterized**
**in that** the trigger is configured as an SMS landline message.

4. Method according to Claim 1,
**characterized**
**in that** the trigger is configured on a network basis.

5. Method according to Claim 4,
**characterized**
**in that** signalling of the TDM-based trigger to the subscriber terminal of the other (B) of the at least two subscribers (A, B) is initiated by a call server.

6. Method according to one of the preceding claims, **characterized**
**in that** the IP-based data connection is wideband.

7. Method according to one of the preceding Claims 1 to 5, **characterized**
**in that** the IP-based data connection is narrowband.

8. Method according to one of the preceding claims, **characterized**
**in that** the message is a multimedia message.

## Revendications

1. Procédé de commande d'une liaison de données basée sur IP qui peut être établie entre au moins deux abonnés (A, B), **caractérisé en ce que**, si nécessaire, un déclencheur basé sur TDM est émis par l'un (A) des au moins deux abonnés (A, B), la liaison de données basée sur IP étant établie automatiquement, un terminal d'abonné d'un autre (B) des au moins deux abonnés (A, B) qui reçoit le déclencheur basé sur TDM acceptant le déclencheur basé sur TDM, procédant à un établissement de liaison de données, signalant qu'il est prêt à la réception et pouvant ensuite recevoir un message correspondant via la liaison de données basée sur IP.

2. Procédé selon la revendication 1, **caractérisé en ce que** le déclencheur est conçu de manière basée sur les abonnés finaux.

3. Procédé selon la revendication 1, 2, **caractérisé en ce que** le déclencheur est conçu comme message SMS de réseau fixe.

4. Procédé selon la revendication 1, **caractérisé en ce que** le déclencheur est conçu de manière basée sur le réseau.

5. Procédé selon la revendication 4, **caractérisé en ce qu'**une signalisation du déclencheur basé sur TDM à l'adresse du terminal d'abonné de l'autre (B) des au moins deux abonnés (A, B) est amorcée par un serveur d'appel.

6. Procédé selon l'une des revendications précédentes, **caractérisé en ce que** la liaison de données basée sur IP est à large bande.

7. Procédé selon l'une des revendications précédentes 1 à 5, **caractérisé en ce que** la liaison de données basée sur IP est à bande étroite.

8. Procédé selon l'une des revendications précédentes, **caractérisé en ce que** le message est un message multimédia.
